# EUROPÄISCHE PATENTANMELDUNG

(11) **EP 1 172 408 A1**
(43) Veröffentlichungstag der Anmeldung: **16.01.2002**
(21) Anmeldenummer: 00810620.5
(22) Anmeldetag: 14.07.2000
(51) Int. Cl.: C08L 63/00

(54) **Volumenmodifizierte Vergussmassen auf der Basis polymerer Matrixharze**

(71) Anmelder: ABB RESEARCH LTD., 8050 Zürich (CH)
(72) Erfinder: Kaltenborn, Uwe, 5453 Remetschwil (CH); Rocks, Jens, 5408 Ennetbaden (CH); Hucke, Thomas, 01309 Dresden (DE)
(74) Vertreter: ABB Patent Attorneys

(57) **Zusammenfassung**

Volumenmodifizierte Vergussmasse auf der Basis eines härtbaren Epoxidharzes oder einer Mischung solcher Harze, welches/welche aus einem Epoxidharz, einem Härter, gegebenenfalls einem Beschleuniger sowie weiteren Additiven wie Füllstoffe, Flexibilisatoren und Farbstoffe, besteht/bestehen, wobei diese Vergussmasse (a) ein dreidimensional vernetztes Polysiloxan in disperser Form und mit einer Teilchengrösse im Bereich von 0.02 µm bis 50 µm, welches gegebenenfalls reaktive Gruppen aufweist, die mit dem Epoxidharz und/oder dem Härter chemisch zu reagieren vermögen, (b) eine ausgewählte lineare oder verzweigte Siloxanverbindung, welche reaktive Gruppen aufweist, die mit dem Epoxidharz und/oder dem Härter chemisch zu reagieren vermögen, sowie gegebenenfalls (c) eine niedermolekulare oligomere Siloxanverbindung, enthält, Verwendung der Vergussmasse als Konstruktionswerkstoff als auch als Isoliermaterial, sowie die daraus hergestellten Formteile und Isolierungen.

## Beschreibung

### Geltungsbereich

Die vorliegende Erfindung betrifft volumenmodifizierte Vergussmassen auf der Basis duroplastischer Epoxidharze, mit verbesserter Hydrophobie, welche für die Herstellung von elektrischen Isolierungen geeignet sind. Mit den erfindungsgemässen Vergussmassen ist es möglich, elektrische Isolierungen, insbesondere in Form von Formteilen und Beschichtungen auf dem Gebiet der Hochspannungsisolierungen, herzustellen, welche auch für den Freilufteinsatz geeignet sind.

### Technisches Gebiet

Isolierung auf Basis polymerer Matrixharze für den Freilufteinsatz sind an sich bekannt. Für Freiluftanwendungen werden traditionell Isolatoren auf Basis von Glas und keramischen Materialien eingesetzt. In den letzten Jahren konnten polymere Isolierstoffe ebenfalls einen stetig steigenden Marktanteil erringen, wobei häufig Giessharzsysteme auf der Basis von Epoxidharzen und Polyurethanen eingesetzt werden. Im Bereich des Schaltanlagenbaus besitzen Epoxidharze als Isoliermaterialien eine wesentliche Bedeutung. Ebenso finden solche Epoxidharzsysteme weitere Anwendungen als Isoliermaterialien in der Herstellung von Messwandlern, Durchführungen, Leistungsschaltern, Trockentransformatoren, elektrischen Maschinen, in der Leistungselektronik, der Mikroelektronik sowie in der Automatisierungstechnik. Im Bereich der Energieübertragung und der Energieverteilung sind vor allem Anwendungen im Innenraum bekannt, vereinzelt gibt es auch Anwendungen auf dem Gebiet der Freiluftisolierungen.

Mit der erfindungsgemässen Zusammensetzung wird es möglich, Hydrophobie in ausgezeichneter Weise als intrinsische Eigenschaft in Epoxidharze einzubauen. Damit wird es möglich, Formteile aus solchen modifizierten Epoxidharzen herzustellen und unter Freiluftbedingungen einzusetzen, wo heute deutlich teurere Elemente aus Silikon-Verbundwerkstoffen eingesetzt werden. Durch die hervorragenden mechanischen Eigenschaften des erfindungsgemässen Epoxidsystems kann dieses sowohl als Konstruktionswerkstoff als auch als Isolierstoff eingesetzt werden, ohne dass dabei die Möglichkeiten der Formgebung beschränkt sind.

Epoxidharze werden heute in der Elektrotechnik sehr vielfältig eingesetzt. Im Bereich der Mittelspannungs- und Hochspannungstechnik sind Epoxidharze in erster Linie als Isolierstoffe zu finden. Da ein breites Angebot von verschiedenen Isolierstoffen mit sehr guten elektrischen Eigenschaften besteht, werden die Hauptanforderungen hinsichtlich der Einsatzfähigkeit von Isolierstoffen nicht an die elektrische Durchschlagsfestigkeit, sondern an die mechanischen Eigenschaften gestellt. Die Auswahl eines Isolierstoffes erfolgt deshalb vermehrt nach zusätzlichen Kriterien wie mechanische Festigkeit, mechanische Flexibilität, Beständigkeit gegen UV-Strahlung, Verarbeitbarkeit und Formenvielfalt, Teilentladungsfreiheit, Kriechstromfestigkeit, Fremdschichtverhalten und Wartungsfreiheit sowie Resistenz gegen komplexe elektrische und klimatische Belastungen bei hoher Luftfeuchtigkeit.

Epoxidharz-Vergussmassen bestehen in der Regel aus den Komponenten Epoxidharz, Härter, Beschleuniger, Füllstoff und Farbstoff. Insbesondere durch die Modifikation des Epoxidharz/Härter-Gemisches wurden die mechanischen Eigenschaften optimiert. Mit der Entwicklung cycloaliphatischer Harze wurden auch UV-beständige Formstoffe bereit gestellt. Eine sehr gute Verarbeitbarkeit und das Vergiessen äusserst komplizierter und/oder grosser Formen lassen sich durch die thermische Steuerung der Aushärtungsreaktion, wie auch durch den Einsatz ausgewählter Härter und Beschleuniger erreichen. In Verbindung mit Verarbeitungsmethoden, wie dem Vakuumverguss oder dem Druck-Gelierverfahren, gelingt es zudem, homogene Werkstücke ohne Gaseinschlüsse herzustellen und somit die Teilentladungsfreiheit zu gewährleisten.

Im Vergleich mit den klassischen festen Isolierstoffen Keramik und Glas treten jedoch bei polymeren Isolierstoffen bei Entladungen entlang der Oberfläche Kriechspuren auf. Die durch den differentiellen Eintrag hoher Energien bewirkte - meist unvollständige - Oxidation der Polymermatrix führt zur Konzentration von leitfähigem, graphitischem Kohlenstoff an der Oberfläche. Dies wiederum verursacht den Verlust der isolierenden Wirkung des Materials. Ein wesentlicher Fortschritt zur Verbesserung der Kriechstromfestigkeit wurde mit dem Einsatz von anorganischen Füllstoffen erreicht. So sind derzeit Harzsysteme mit einem Füllgrad von bis zu 70% bekannt, wobei als bevorzugte Füllstoffe SiO₂, Al₂O₃, CaMg(CO₃)₂ (Dolomit) zum Einsatz kommen.

Trotz dieser guten Eigenschaften ist der Einsatz von Epoxidharz als elektrisches Isoliermaterial im wesentlichen auf den Innenraum im Schaltanlagenbau beschränkt geblieben, wobei dies in erster Linie dem ungenügenden Fremdschicht- und Trackingverhalten sowie der ungenügenden Wartungsfreiheit zuzuschreiben ist. Der wesentliche Aspekt dabei ist die geringe Widerstandsfähigkeit gegenüber der komplexen elektrischen und klimatischen Belastung. Untersuchungen haben gezeigt, dass es selbst bei Innenraumanlagen zum Versagen von Isolierteilen kommen kann. Ist beispielsweise die Oberfläche des Epoxidharzes von einer Fremdschicht belegt und kann eine Betauung nicht ausgeschlossen werden, so können im Innenraum partiell Belastungen auftreten, die deutlich über denen von Freiluftanlagen liegen und somit verstärkt zum Versagen führen. Tritt eine solche Belastung durch Betauung der Oberfläche auf, so ist die isolierende Wirkung wesentlich von der wasserabweisenden Wirkung (Hydrophobie) der betauten Oberfläche abhängig. Bei stark hydrophoben Oberflächen, wie sie z.B. bei Silikonen auftreten, bilden sich Taubeläge als einzelne, voneinander getrennte Tröpfchen aus. Bei hydrophilen Oberflächen hingegen kommt es bei der Benetzung zur Ausbildung eines Filmbelags, der zu einem Überschlag des Isolators führen kann.

Aufgrund des polaren Charakters von Epoxidharzen sind bei Epoxidharzoberflächen keine hydrophoben Eigenschaften zu erwarten. Zwar kann auf technischen Epoxidharzoberflächen eine gewisse Hydrophobie nachgewiesen werden. Diese ist jedoch nicht intrinsisch, sondern wird in der Regel durch den verwendeten Füllstoff und dessen Vorbehandlung sowie durch die Verwendung von Silikon enthaltenden Formtrennmitteln hervorgerufen. Eine mittel- oder langfristige Nutzung dieser hydrophoben Eigenschaften ist nicht möglich, da diese nur eine äusserst geringe Beständigkeit gegen Umwelteinflüsse aufweisen.

### Stand der Technik

Um eine Verbesserung der genannten Eigenschaften von Epoxidharzoberflächen, insbesondere deren Hydrophobie, zu erreichen, wird im US-Patent Nr. 3,843,577 die Addition von Organopolysiloxanölen zum Epoxidharz vorgeschlagen. Die Silikonöle werden in das Epoxidharz vor dem Verguss dispergiert und liegen nach der Aushärtung wieder frei in der Matrix vor. Dies hat, insbesondere bei hohen Befüllungsgraden, diverse mechanische und elektrische Nachteile. Die Hydrophobie ist nicht intrinsisch im Material verankert, wobei mit einer Entmischung der Bestandteile zu rechnen ist.

In der W098/32138 wird vorgeschlagen, dem Epoxidharz eine flüssige verhältnismässig niedermolekulare oligomere Siloxanverbindung zuzusetzen, welche mit Epoxidgruppen versehen ist. Damit gelingt es zwar, diese Siloxanverbindung im Härtungsprozess chemisch in die Epoxidmatrix einzubauen. Es hat sich jedoch gezeigt, dass die Zugabe des niedermolekularen Silikonöls alleine, trotz der möglichen chemischen Einbindung in die Epoxidmatrix, bei den in der Praxis zu verwendenden Mengen zur Schaffung einer flüssigen Phase im Harzsystem führt. Dabei kommt es zur Bildung von Mikro-Voids, welche zur Verminderung der mechanischen Festigkeit und der elektrischen Eigenschaften, beispielsweise der Durchschlagsspannung, führen.

### Darstellung der Erfindung

Es wurde nun gefunden, dass die oben beschriebenen Nachteile erheblich vermindert oder behoben werden, wenn man der härtbaren Epoxidmatrix, welche in der Regel aus einem Epoxidharz, einem Härter, gegebenenfalls einem Beschleuniger sowie weiteren Additiven wie Füllstoffe, Flexibilisatoren und Farbstoffe, besteht, (a) ein dreidimensional vernetztes Polysiloxan in disperser Form und mit einer Teilchengrösse im Bereich von 0.02 µm. bis 50 µm, welches gegebenenfalls reaktive Gruppen enthält, die mit dem Epoxidharz und/oder dem Härter chemisch zu reagieren vermögen, sowie (b) eine ausgewählte lineare oder verzweigte Siloxanverbindung, welche reaktive Gruppen enthält, die mit dem Epoxidharz und/oder dem Härter chemisch zu reagieren vermögen, zusetzt. Mit einer derart erhaltenen Zusammensetzung werden überraschenderweise insbesondere erheblich verbesserte Ergebnisse hinsichtlich der Grundhydrophobie als auch hinsichtlich der Hydrophobieerholung nach einer Zerstörung der Hydrophobie durch äussere Teilentladungen, erzielt. Insbesondere sind die Ergebnisse erheblich besser im Vergleich zu Zusammensetzungen, welche jeweils nur ein dreidimensional vernetztes Polysiloxan in disperser Form oder nur eine ausgewählte lineare oder verzweigte Siloxanverbindung, welche reaktive Gruppen enthält, die mit dem Epoxidharz zu reagieren vermögen, enthalten. Eine deutlich synergistische Wirkung zeigt sich hinsichtlich der mechanischen und elektrischen Eigenschaften.

Die vorliegende Erfindung ist in den Patentansprüchen definiert. Insbesondere betrifft die vorliegenden Erfindung eine volumenmodifizierte Vergussmasse auf der Basis eines härtbaren Epoxidharzes oder einer Mischung solcher Harze, welches/welche aus einem Epoxidharz, einem Härter, gegebenenfalls einem Beschleuniger sowie weiteren Additiven wie Füllstoffe, Flexibilisatoren und Farbstoffe, besteht/bestehen, wobei diese Vergussmasse dadurch gekennzeichnet ist, dass diese (a) ein dreidimensional vernetztes Polysiloxan in disperser Form und mit einer Teilchengrösse im Bereich von 0.02 µm bis 50 µm, welches gegebenenfalls reaktive Gruppen aufweist, die mit dem Epoxidharz und/oder dem Härter chemisch zu reagieren vermögen, (b) eine ausgewählte lineare oder verzweigte Siloxanverbindung, welche reaktive Gruppen aufweist, die mit dem Epoxidharz und/oder dem Härter chemisch zu reagieren vermögen, sowie gegebenenfalls (c) eine niedermolekulare oligomere Siloxanverbindung, enthält.

Die erfindungsgemässe Vergussmasse ist sowohl für die Verwendung als Konstruktionswerkstoff als auch als Isoliermaterial geeignet, insbesondere für die Herstellung von Formteilen und Beschichtungen auf dem Gebiet der elektrischen Isolierungen, beispielsweise Hochspannungsisolierungen, insbesondere für den Freilufteinsatz.

In diesem Sinne betrifft die vorliegende Erfindung die Verwendung der erfindungsgemässen Vergussmasse als Konstruktionswerkstoff als auch als Isoliermaterial, für die Herstellung von Formteilen und Beschichtungen auf dem Gebiet der elektrischen Isolierungen, insbesondere Hochspannungsisolierungen, insbesondere Hochspannungsisolierungen für den Freilufteinsatz.

Die Erfindung betrifft im weiteren die aus den erfindungsgemässen Vergussmasse hergestellten Konstruktionsteile und elektrischen Isolierungen.

Die Erfindung betrifft im weiteren ein Verfahren zur Herstellung der erfindungsgemässen Vergussmassen.

Dreidimensional vernetzte disperse Polysiloxane mit einer durchschnittlichen Teilchengrösse im Bereich von 0.02 µm bis 50 µm, sind aus der DE 36 34 084 oder aus der EP 0 407 834 bekannt. Die in der vorliegenden Erfindung verwendete Komponente (a) entspricht vorzugsweise den dreidimensional vernetzten Silikonen bzw. den Silikonharzdispersionen, welche in der DE 36 34 084 oder der EP 0 407 834 beschrieben sind. Die Inhalte der DE 36 34 084 und der EP 0 407 834 werden deshalb von der vorliegenden Beschreibung übernommen (are incorporated herein by reference).

Die Komponente (a), das heisst das dreidimensional vernetzte Polysiloxan in disperser Form, wird vorzugsweise separat als Polysiloxandispersion, bestehend aus einer äusseren Phase und einer dispersen Phase, hergestellt und der Epoxid-Vergussmasse oder einer Komponenten derselben vor deren Verarbeitung bzw. vor deren Härtung zugesetzt. Die Herstellung von solchen Dispersionen ist an sich bekannt.

Die äussere Phase der zu verwendenden Polysiloxandispersion besteht vorzugsweise zu etwa 25 bis 99,9 Gew.-% aus einem bei Temperaturen von 20°C bis 100°C flüssigen monomeren oder polymeren Polyol, aus einem linearen oder verzweigten Polyglykolether, aus einem Polyester auf der Basis von Polyolen und aliphatischen, cycloaliphatischen oder aromatischen Dicarbonsäuren, aus Acrylatpolymeren oder Methacrylatpolymeren sowie entsprechende Copolymeren, oder einem Gemisch solcher Verbindungen, wie solche als Härter in Epoxidharzsystemen bekanntermassen einsetzbar sind.

Für die äussere Phase verwendbar sind insbesondere lineare oder verzweigte aliphatische Polyole wie beispielsweise Ethylenglycol, Diethylenglycol, die Propylenglycole, Butylenglycole, 1,2-Butandiol, 1,3-Butandiol, 1,4-Butandiol, Neopentylglycol, Isopentylglycol, 1,6-Hexandiol, Glycerin, Hexantriol, Trimethylolethan, Trimethylolpropan, Erythrit, Pentaerythrit, Cyclohexandiol oder 1,4-Dimethylolcyclohexan.

Als äussere Phase verwendbar sind auch Reaktionsprodukte der genannten Polyole mit aliphatischen, cycloaliphatischen oder aromatischen Dicarbonsäuren, oder auch Tricarbonsäuren, wie solche an sich für die Verwendung als Härter in Epoxidvergussmassen bekannt sind. Solche, Carboxylgruppen enthaltende, Polyesterpolymere weisen bevorzugt eine Säurezahl (angegeben in mg KOH/g Polyester) von 10 bis 100 auf. Die Polyester haben zweckmässigerweise eine Glasübergangstemperatur im Bereich von 20 bis 100°C und sind vorzugsweise Kondensationsprodukte von Polyolen mit Dicarbonsäuren und gegebenenfalls polyfunktionellen Carbonsäuren oder den entsprechenden Carbonsäureanhydriden. Geeignete Polyole sind oben genannt. Als Carbonsäuren geeignet sind z.B. Isophthalsäure, Terephthalsäure, Phthalsäure, Methylphthalsäuren, Tetrahydrophthalsäure, Hexahydrophthalsäure, Methyltetrahydrophthalsäuren, z.B. 4-Methyltetrahydrophthalsäure, Cyclohexandicarbonsäuren, Bernsteinsäure, Glutarsäure, Adipinsäure, Pimelinsäure, Suberinsäure, Azelainsäure, Sebacinsäure, Dodecandicarbonsäure, Fumarsäure, Maleinsäure oder 4,4'-Diphenyldicarbonsäure. Häufig basieren kommerziell verfügbare Polyester auf Neopentylglycol und/oder Trimethylolpropan als wesentliche alkoholische Bestandteile sowie auf Adipinsäure und/oder Terephthalsäure und/oder Isophthalsäure und/oder Trimellitsäure als wesentliche Säurekomponenten.

Die disperse Phase der zu verwendenden Polysiloxandispersion besteht vorzugsweise zu etwa 0,1 bis 75 Gew.-% aus einem oder mehreren dreidimensional vernetzten, d.h. quervernetzten, Polyorganosiloxanen, wobei die vernetzten Polyorganosiloxan-Teilchen einen mittleren Durchmesser von 0.02 µm bis 50 µm, vorzugsweise von 0.05 µm bis 10 µm, vorzugsweise von 0.07 µm bis 5 µm und vorzugsweise von 0.07 µm bis 1 µm aufweisen.

Im weiteren können diese Dispersionen bis zu 20 Gew.-% Additive, wie Lösungsmittel, Weichmacher, Katalysatoren, Vernetzungsmittel, Stabilisatoren, Dispergiermittel, enthalten. Solche Additive sind an sich bekannt.

Diese Polyorganosiloxanteilchen besitzen gegebenenfalls an ihrer Oberfläche reaktive Gruppen, über die sie an das Epoxidharz oder an die oben als äussere Phase beschriebenen Verbindungen chemisch angebunden werden können. Vorzugsweise wird bei der Herstellung der Dispersion eine äussere Phase verwendet, die anschliessend als Härter in der Epoxidvergussmasse eingesetzt werden kann. Die chemische Anbindung wird vorzugsweise während der Aushärtung der Vergussmasse vorgenommen. Falls eine chemische Anbindung an die äussere Phase möglich ist, so kann diese aber zumindest teilweise bereits vor der Zugabe zur Vergussmasse vorgenommen werden.

Eine sehr grosse Zahl von dreidimensional bzw. quervernetzten Organopolysiloxanen ist bekannt. Zumeist sind dies Dialkylpolysiloxane, vorzugsweise Dimethylpolysiloxane, wobei ein Teil der Alkylgruppen durch Phenyl und/oder an sich bekannte reaktive Gruppen ersetzt sein können. Als vernetzende Gruppen kommen vorzugsweise die folgenden Gruppen in Frage:

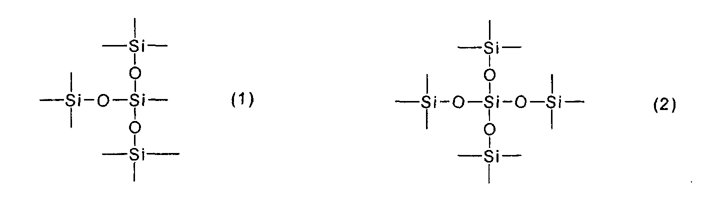

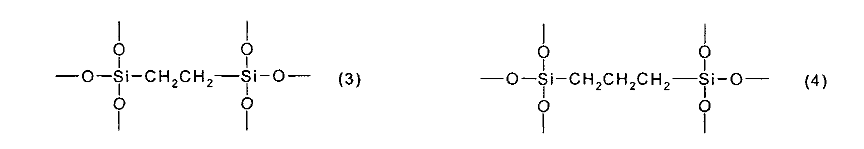

Die Vernetzung mittels solcher Gruppen ist an sich bekannt. Die Übergangsgruppe (3) entsteht beispielsweise bei der Vernetzungsreaktion eines Vinylsiloxans mit einem Hydrogensiloxan, während die Übergangsgruppe (4) bei der Vernetzungsreaktion eines Allylsiloxans mit einem Hydrogensiloxans, jeweils in Gegenwart eines geeigneten Katalysators, wie eines an sich bekannten Pt-Katalysators, gebildet wird.

Dabei sind die eingezeichneten freien Valenzen der Siliziumatome in den quervernetzten Siloxanen entweder an Sauerstoff oder Wasserstoff oder an organische einwertige, zweiwertige oder höherwertige Reste, welche gesättigt oder ungesättigt sein können und welche gegebenenfalls eine reaktive Gruppe tragen, gebunden. Bevorzugt sind einwertige Reste, die gleich oder verschieden sein können, und lineare oder verzweigte, gegebenenfalls chlorierte und/oder fluorierte Alkylgruppen mit 1 bis 8 C-Atomen darstellen, oder (C₁-C₄)-Alkylaryl oder Aryl; vorzugsweise gegebenenfalls fluoriertes Alkyl mit 1-4 C-Atomen oder Phenyl, vorzugsweise 3,3,3-Trifluoropropyl, Monofluoromethyl, Difluoromethyl oder Alkyl mit 1-4 C-Atomen, vorzugsweise Methyl oder Phenyl, vorzugsweise Methyl.

Ungesättigte Substituenten sind insbesondere Vinyl oder Allyl, wobei diese Substituenten in der Regel direkt an das Siliziumatom gebunden sind. Die reaktiven Gruppen sind vorzugsweise ausgewählt aus Glycidyl, Hydroxy, Amino (-NH₂), Carboxyl und/oder Wasserstoff, wobei diese jeweils je nach Art des Substituenten direkt oder über einen organischen Rest an das Silziumatom gebunden ist. Der Substituent Wasserstoff ist direkt an das Siliziumatom gebunden.

In diesem Sinne entspricht der Substituent, welcher eine reaktive Gruppe darstellt oder eine reaktive Gruppe trägt, vorzugsweise der allgemeinen Formel (a):

- (A)ᵣ-(reaktive Gruppe) (a),

worin
A einen zweiwertigen gesättigten oder ungesättigten alifatischen Rest, der ein oder mehrere Sauerstoffatome und/oder -NH-Gruppen oder Phenylen enthalten kann, einen zweiwertigen cycloalifatischen Rest, einen zweiwertigen aromatischen Rest, wobei jeweils an eine freie Valenz dieses zweiwertigen Restes eine reaktive Gruppe gebunden ist, bedeutet.

A als zweiwertiger gesättigter alifatischer Rest bedeutet vorzugsweise einen Rest der Formel -CₛH₂ₛ-, vorzugsweise-(CH₂)ₛ-, worin s eine ganze Zahl von 1 bis 6, vorzugsweise 1, 2 oder 3, und r Null oder 1, bedeutet.

Der Ausdruck "-(reaktive Gruppe)-" bedeutet vorzugsweise Wasserstoff, Vinyl oder Allyl, wobei diese Substituenten in der Regel direkt an das Siliziumatom gebunden sind (r = Null) oder Glycidyl, Hydroxy (-OH), Amino (-NH₂) und/oder Carboxyl, wobei Hydroxy direkt oder über den Linker A an das Silziumatom gebunden sein kann.

Bedeutet die -(reaktive Gruppe)- Glycidyl, so bedeutet der Rest der Formel (a) vorzugsweise einen 3-Glycidoxypropylrest bzw. das Siliziumatom an welches der 3-Glycidoxypropylrest gebunden ist, bildet vorzugsweise einen zweiwertigen Methyl-(3-Glycidoxypropyl)-siloxyrest.

A als zweiwertiger cycloalifatischer Rest bedeutet vorzugsweise Cyclohexylen; als zweiwertiger aromatischer Rest vorzugsweise Phenylen, vorzugsweise metha- oder para-Phenylen.

A als gesättigter oder ungesättigter alifatischer Rest, welcher durch Phenylen substituiert ist, wobei jeweils eine freie Valenz durch die reaktive Gruppe besetzt ist, bedeutet vorzugsweise - (CH₂)ₛ - (C₆H₄) -, wobei die reaktive Gruppe vorzugsweise an das Phenylen, vorzugsweise in metha- oder para-Stellung, gebunden ist. Bevorzugte Reste der Formel (a) sind beispielsweise auch: m-Aminophenyl oder p-Aminophenyl [H₂N- (C₆H₄) -], 3- (m-Aminophenoxy)-propyl [H₂N- (C₆H₄) -OCH₂CH₂CH₂-], 3-(2-Aminoethyl) aminopropyl [H₂NCH₂CH₂NH (CH₂)₃-], oder Hydroxymethyl [HO-CH₂-].

Die Methoden für die Herstellung solcher quervernetzter Siloxane und Siloxandispersionen sind an sich bekannt.

Vorzugsweise geht man so vor, dass man die als Ausgangsmaterialien einzusetzenden dreidimensional vernetzbaren Polyorganosiloxane, welche gegebenenfalls mit reaktiven Gruppen versehen sind, gegebenenfalls zusammen mit weiteren Hilfsstoffen, in der äusseren Phase dispergiert, vorzugsweise bei Temperaturen von 20 bis 100°C, und diese di sperse Phase soweit dispergiert, dass der mittlere Tröpfendurchmesser der dispergierten Teilchen/Tröpfchen im Bereich von 0.02 µm bis 50 µm liegt, und anschliessend die Komponenten der dispersen Phase unter Bildung fester Teilchen quervernetzt.

Die Teilchengrösse der dispergierten quervernetzten Polysiloxanteilchen, deren durchschnittliches Molekulargewicht, deren chemische Zusammensetzung, deren Viskosität und damit deren mechanische Eigenschaften, können vom Fachmann ohne weiteres variiert werden, um im Einzelfall die Eigenschaften zu optimieren.

Wichtig ist die Teilchengrösse und allenfalls die an der Teilchenoberfläche sich befindenden reaktiven Gruppen.

Bei der Herstellung der Dispersion ist der Anteil der dispersen Phase in der äusseren Phase, das heisst, die Konzentration der vernetzbaren Polyorganosiloxane in der äusseren Phase, nicht kritisch. Dies hängt vielmehr von effektiven Konzentrationsgrenze der dispersen Phase ab, wobei die Dispersion als "Masterbatch" zu betrachten ist, welche der Epoxid-Vergussmasse als Komponente zugesetzt wird. Die Dispersion kann z.B. von 0,1 Gew.-% bis 75 Gew.-% an dispergiertem Polysiloxan enthalten. Die Herstellung solcher Dispersionen ist an sich bekannt.

Eine sehr grosse Zahl von Vernetzungsreaktionen ist auf dem Gebiet der Silikonverbindungen bekannt. Dies ist bereits beschrieben worden und dem Fachmann bekannt. So kann man Vinylsiloxane mit Hydrogensilanverbindungen in Gegenwart von geeigneten Katalysatoren, z.B. Pt-Katalysatoren, mittels einer Additionsreaktion vernetzen. Man kann aber auch Silane mittels Alkoxysilanen kondensierend vernetzen oder Fremdverbindungen, wie Tetrabutyltitanat oder Zinn(II)octoat, verwenden.

Als Komponente (b), das heisst als lineare oder verzweigte Siloxanverbindung, welche reaktive Gruppen aufweist, kommt vorzugsweise eine fliessfähige Polyorganosiloxanverbindung in Frage, beispielsweise ein Polydimethylsiloxan, welches neben der reaktiven Gruppen gegebenenfalls weitere Substituenten wie Phenyl, Cyclohexyl, fluorierte und/oder chlorierte organische Substituenten, CHF-Einheiten, -CF₂-Einheiten, -CF₃-Einheiten, -CHCl-Einheiten, -C(Cl)₂-Einheiten und/oder -C(Cl)₃-Einheiten aufweist. Vorzugsweise hat die Verbindung der Komponente (b) eine Viskosität im Bereich von etwa 50 cSt bis 10'000 cSt, vorzugsweise im Bereich von 100 cSt bis 10'000 cSt und vorzugsweise im Bereich von 500 cSt bis 3'000 cSt, gemessen gemäss DIN 53 019 bei 20°C.

Vorzugsweise handelt es sich bei der Komponente (b) um eine Verbindung, bzw. ein Verbindungsgemisch, der allgemeinen Formel (I) : 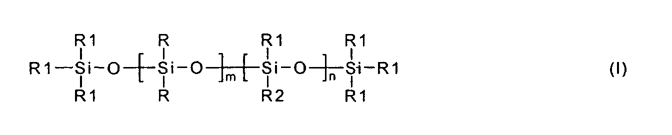 worin
- R: unabhängig voneinander einen linearen, verzweigten oder cyclischen, gegebenenfalls chlorierten und/oder fluorierten, Alkylrest mit 1 bis 8 Kohlenstoffatomen, (C₁-C₄)-Alkylaryl oder Aryl; vorzugsweise einen, gegebenenfalls fluorierten, Alkylrest mit 1 bis 4 Kohlenstoffatomen oder Phenyl; vorzugsweise Phenyl, 3,3,3-Trifluoropropyl, Monofluoromethyl, Difluoromethyl oder Alkyl mit 1-4 Kohlenstoffatomen; vorzugsweise Methyl;
- R₁: unabhängig voneinander eine der Bedeutungen von R oder R₂, wobei gegebenenfalls zwei an verschiedene Si-Atome gebundene endständige Substituenten R₁ zusammen genommen für ein Sauerstoffatom stehen (= cyclische Verbindung);
- R₂: eine der Bedeutungen von R oder einen Rest -(A)ᵣ-(reaktive Gruppe), worin-(A)ᵣ-(reaktive Gruppe) die oben angegebenen Bedeutungen hat;
- m: durchschnittlich von Null bis 5000, vorzugsweise von 20 bis 5000, vorzugsweise 50 bis 1500;
- n: durchschnittlich von Null bis 100, vorzugsweise 2 bis 100, vorzugsweise 2 bis 20;

bedeuten, wobei (i) die Verbindung der Formel (I) mindestens zwei reaktive Gruppen pro Molekül aufweist, (ii) die Summe von [m+n] für nicht-cyclische Verbindungen mindestens 20, vorzugsweise mindestens 50 beträgt und (iii) die Gruppen -[Si(R) (R)O]- und - [Si(R₁) (R₂)O]- in beliebiger Reihenfolge im Molekül angeordnet sind. Die Summe von [m+n] für nicht-cyclische Verbindungen liegt vorzugsweise durchschnittlich im Bereich von 20 bis 10000, vorzugsweise im Bereich von 50 bis 1500.

Das Verhältnis von Methyl zu Phenyl (für die Bedeutung von R) ist durch die Fliessfähigkeit der Verbindung bzw. des Verbindungsgemisches vorgegeben. Vorzugsweise bedeutet R Methyl. Die Verbindung der Formel (I) stellt in der Regel ein Gemisch von Verbindungen der Formel (I) dar, was dem Fachmann bekannt ist.

Die reaktiven Gruppen der Komponente (b) sind vorzugsweise dieselben wie diejenigen der Komponente (a). Ebenso hat der Linker -A- in der Komponente (b) vorzugsweise dieselbe Bedeutung wie in der Komponente (a). In diesem Sinne sind die bevorzugten reaktiven Gruppen der Komponente (b): 3-Glycidoxypropyl bzw. das Siliziumatom an welches der 3-Glycidoxypropylrest gebunden ist, bildet vorzugsweise einen zweiwertigen Methyl-(3-Glycidoxypropyl)siloxyrest, m-Aminophenyl oder p-Aminophenyl, 3-(m-Aminophenoxy)propyl, {3-(2-Aminoethyl)aminopropyl} und Hydroxymethyl.

Ist die Verbindung der Formel (I) eine cyclische Verbindung, so ist diese aus -[Si (R) (R) 0]- und/oder -[SiR₁(R₂)O]-Einheiten zusammengesetzt, welche einen Ring mit vorzugsweise 4 bis 12 solcher Einheiten bilden. Von den ringförmigen Siloxanen sind jedoch die ringförmigen oligomeren Polysiloxane mit 4 bis 8 Siloxy-Einheiten bevorzugt, wobei diese mindestens 2 reaktive Gruppen aufweisen.

Die gegebenenfalls anwesende niedermolekulare oligomere Siloxanverbindung ist eine Verbindung, welche (1) aus -[Si (R) (R) O]- Einheiten, welche endständig -OSi(R)₃-Gruppen bzw. -Si(R)₃-Gruppen aufweisen, zusammen gesetzt ist oder (ii) stellt eine cyclische Verbindungen der Formel [Si(R)(R)O]ₜ dar, worin t eine ganze Zahl von 4 bis 12, vorzugsweise 4 bis 8 bedeutet. Diese niedermolekulare oligomere Siloxanverbindung weist keine reaktiven Gruppen auf.

Die Summe der Komponente (a) und der Komponente (b) bezogen auf die gesamte Menge der erfindungsgemässen Vergussmasse beträgt vorzugsweise 0.1 Gew.-% bis 30 Gew.-%, vorzugsweise 0,5 Gew.-% bis 10 Gew.-% und insbesondere etwa 2 bis 5 Gew.-%.

Das Gewichtsverhältnis der Komponente (a) zur Komponente (b) ist vorzugsweise im Bereich von 5:1 bis 1:5 , vorzugsweise im Bereich von 5:1 bis 2:1, und beträgt vorzugsweise etwa 4,4:1.

Die Menge der niedermolekulare oligomere Siloxanverbindung beträgt vorzugsweise 0.1 Gew.-% bis 10 Gew.-%, vorzugsweise 0,5 Gew.-% bis 5 Gew.-% und insbesondere etwa 1 Gew.-%, bezogen auf das Gesamtgewicht der Mischung.

Die weiteren gegebenenfalls anzuwendenden Additive werden in an sich bekannten Mengen zugesetzt.

Für die Herstellung der erfindungsgemässen volumenmodifizierten Vergussmasse kann man die Basiskomponenten des härtbaren Epoxidharzes, das heisst das Epoxidharz, den Härter, den gegebenenfalls anwesenden Beschleuniger sowie die weiteren Additive wie Füllstoffe und Farbstoffe, in beliebiger Reihenfolge mischen. Dieser Mischung setzt man vor, während oder anschliessend an die Vermischung, die Dispersion der Komponente (a), das ist das dreidimensional vernetzte Polysiloxan in disperser Form, die Komponente (b), das ist die ausgewählte lineare oder verzweigte reaktive Gruppen enthaltende Siloxanverbindung, sowie gegebenenfalls die Komponente (c), das ist die niedermolekulare oligomere Siloxanverbindung, zu.

Vorzugsweise geht man so vor, dass man die Komponenten (a) und (b) in Abhängigkeit von ihren aktiven Gruppen entsprechend vormischt. Enthalten die Komponenten (a) und (b) Epoxidgruppen, so mischt man diese beiden Komponenten vorzugsweise mit dem Epoxidgruppen enthaltenden Epoxidharz, bevor man sie dann zur Herstellung der Vergussmasse verwendet. Enthalten die Komponenten (a) und (b) hingegen Hydroxyl, Amino oder Carboxyl, so mischt man diese Komponenten vorzugsweise mit dem Härter bevor man sie dann zur Herstellung der Vergussmasse verwendet.
In einzelnen Fällen ist es von Vorteil, zumindest einen Teil der Epoxidgruppen enthaltenden Komponenten (a) und (b) mit dem Härter vorzumischen und auch vorzuhärten oder zumindest einen Teil der Hydroxyl, Amino oder Carboxyl enthaltenden Komponenten (a) und (b) mit dem Epoxidharz vorzumischen und auch vorzuhärten. Dies wirkt sich positiv auf die Verteilung der Silikonkomponenten in der Vergussmasse und somit auf die physikalischen und mechanischen Eigenschaften des gehärteten Produktes aus.

Die Komponente (c) mischt man vorzugsweise zuerst mit der Komponente (a) und/oder (b) bevor man diese zur Herstellung der Vergussmasse verwendet.

Die erfindungsgemässen Vergussmassen in flüssiger oder pastöser Form sind duroplastisch härtbare Giessharzsysteme in Form von Epoxidharzen. Bevorzugt sind diejenigen mit guten elektrischen Eigenschaften, vorzugsweise aromatische und/oder cycloaliphatische Epoxidharze. Solche in der Elektroindustrie verwendeten Epoxidharze sind an sich aus der Literatur bekannt und können erfindungsgemäss verwendet werden. In der Elektroindustrie verwendbare Epoxidharze sind von verschiedenen Herstellern bekannt. Zahlreiche Publikationen existieren auch zu den elektrischen Araldit®-Giessharzsystemen der Ciba-Geigy AG.

Epoxidharze für elektrische Anwendungen enthalten in der Regel eine Glycidylverbindung oder ein Gemisch von Glycidylverbindungen und mindestens eine hydroxylhaltige Verbindung oder ein Gemisch solcher Verbindungen und/oder ein carboxylhaltiges Polymer, insbesondere einen carboxylterminierten Polyester und/oder ein carboxylhaltiges Acrylat- und/oder Methacrylatpolymer sowie gegebenenfalls einen Beschleuniger für die Vernetzungsreaktion der Glycidylverbindung oder Glycidylverbindungen mit der hydroxylhaltigen Verbindung und/oder dem carboxylhaltigen Polymeren sowie an sich übliche weitere Additive.

Bevorzugt sind vernetzend wirkende Glycidylverbindungen, welche mindestens zwei 1,2-Epoxidgruppen im Molekül aufweisen. Vorzugsweise verwendet man ein Gemisch von Polyglycidylverbindungen, beispielsweise ein Gemisch von Diglycidyl- und Triglycidylverbindungen. Solche Verbindungen sind an sich bekannt und in der Literatur ausführlich beschrieben. In der Regel kann aus den bekannten Glycidylverbindungen eine für die vorgesehene elektrische Anwendung geeignete Auswahl getroffen werden, was für den Fachmann ein Optimierungsproblem darstellt.

Geeignete Glycidylverbindungen sind beispielsweise in EP-A-0 297 030, EP-A-0 356 391, EP-A-0 462 053, EP-A-0 506 617, EP-A-0 536 085 oder in U.S. Patent US-A-3,859,314 oder in der DE-A-31 26 411 beschrieben. Diese umfassen Verbindungen, die unsubstituierte Glycidylgruppen und/oder mit Methylgruppen substituierte Glycidylgruppen aufweisen. Die Glycidylverbindungen haben vorzugsweise ein Molekulargewicht zwischen 200 und 1200, insbesondere zwischen 200 und 1000 und können fest oder flüssig sein. Ihr Epoxidgehalt beträgt vorzugsweise mindestens drei Äquivalente pro Kilogramm der Verbindung, vorzugsweise mindestens vier Äquivalente pro Kilogramm und insbesondere mindestens fünf Äquivalente pro Kilogramm. Bevorzugt sind Glycidylverbindungen, die Glycidylether- und/oder Glycidylestergruppen aufweisen. Eine Glycidylverbindung kann dabei auch beide Arten von Glycidylgruppen enthalten, wie z.B. 4-Glycidyloxy-benzoesäureglycidylester. Bevorzugt sind Polyglycidylester mit 1-4 Glycidylestergruppen, insbesondere Diglycidylester und/oder Triglycidylester. Die bevorzugten Diglycidylester leiten sich vorzugsweise von aromatischen, araliphatischen, cycloaliphatischen, heterocyclischen, heterocyclisch-aliphatischen oder heterocyclisch-aromatischen Dicarbonsäuren mit 6 bis 20, insbesondere 6 bis 12 Ringkohlenstoffatomen oder von aliphatischen Dicarbonsäuren mit 2 bis 10 Kohlenstoffatomen ab. Solche Verbindung sind beispielsweise unter dem Handelsnamen Araldit® (Ciba SC Ltd) kommerziell erhältlich. Bevorzugt sind beispielsweise die an sich bekannten Epoxidharze auf Basis mehrwertiger aromatischer oder cycloaliphatischer Hydroxylverbindungen. Auf Basis von aromatischen Hydroxylverbindungen sind beispielsweise die Glycidylether von Bisphenol A oder Bisphenol F sowie die Glycidylether von Phenol-Novolak-Harzen oder Kresol-Novolak-Harzen bekannt. Cycloaliphatische Epoxidharze sind z.B. bis-epoxidierter 1,2,3,6-Tetrahydrobenzoesäure-beta-1',2',3',6'-tetrahydrophenylethylester, Hexahydro-o-phthalsäure-bis-glycidylester. Auch aliphatische Epoxidharze, wie z.B. 1,4-Butandioldiglycidylether, sind für die erfindungsgemässe Verwendung geeignet.

Als Härter zu verwendende hydroxylhaltige Verbindungen und/oder carboxylhaltige Polymere, insbesondere carboxylterminierte Polyester und/oder carboxylhaltige Acrylat- und/oder Methacrylatpolymere sowie gegebenenfalls zu verwendende Beschleuniger für die Vernetzungsreaktion der Glycidylverbindungen sowie an sich übliche weitere Additive sind an bekannt.

Bevorzugt kommen Vergussmassen zum Einsatz, welche mindestens einen Füllstoff enthalten. Solche Füllstoffe sind vorzugsweise Quarzmehl, Aluminiumoxid und/oder Dolomite in verschiedenen an sich bekannten Mahlungen. Die Füllstoffe sind bevorzugt mit einer Silanisierung versehen, um eine optimale chemische Anbindung der Partikel in der Harzmatrix zu gewährleisten.

Die erfindungsgemässen Vergussmassen werden insbesondere für die Herstellung von Hochspannungsisolierung für den Freilufteinsatz verwendet, insbesondere für die Herstellung von Freiluftisolatoren bei Hochspannungsleitungen als Langstab-, Verbund- und Kappenisolatoren sowie für Stützisolatoren im Mittelspannungsbereich. Die erfindungsgemässen Vergussmassen können auch in der Herstellung von Isolierungen bei Freiluft-Leistungschaltern, Messwandlern, Durchführungen und Ableitern, im Schaltanlagenbau, in Leistungsschaltern, Trockentransformatoren und elektrischen Maschinen, Verwendung finden. Im weiteren können die erfindungsgemässen Vergussmassen auch als Beschichtungsmaterialien für Transistoren und andere Halbleiterelemente und ganz allgemein zum Imprägnieren von elektrischen Bauteilen verwendet werden. Ebenso kann die erfindungsgemässe Vergussmasse als Korrosionsschutz für metallische Bauteile, z.B. für Brücken und Industrieanlagen, verwendet werden, wobei beispielsweise der Glanz der Schicht auch mit der Alterung nicht verloren geht.

Dabei wird das Formteil in einem Schritt oder in zwei oder mehreren Schritten hergestellt bzw. gegossen. So kann man zuerst einen Kern giessen, dessen Material keine erfindungsgemässe Vergussmasse enthält. In einem zweiten Giessschritt wird dann die fertige Form hergestellt, indem der Kern mit dem erfindungsgemässen Vergussmaterial überzogen wird. Dabei kann der Kern aus irgend einem geeigneten Material bestehen, beispielsweise auch aus einem faserverstärkten Kunststoff. Vorzugsweise wird als Kern ein Material verwendet, welches mit dem erfindungsgemässen Vergussmaterial kompatibel ist und insbesondere mit diesem eine chemische Bindung eingehen kann. Dies ist beispielsweise dann der Fall, wenn der Kern aus einem nicht modifizierten Giessharz und der Überzug aus einem erfindungsgemäss modifizierten Giessharz besteht. Im weiteren ist es möglich, dass das erfindungsgemässe Vergussmaterial auf einen Kern angegossen wird, und der Kern mit der Polymermatrix des Vergussmaterials keine chemische Bindung eingeht, dass aber aufgrund des Schrumpfdruckes des Vergussmaterials eine genügend starke mechanisch Verbindung zwischen dem Kern und dem angegossenen Teil entsteht.

Das folgenden Beispiel erläutert die Erfindung.

### Beispiel 1 (Herstellung der erfindungsgemässen Vergussmasse und von Prüfkörpern)

a) 11,1 Teile (Gewichtsteile) eines cycloaliphatischen Epoxidharzes (CY 184, Ciba-Geigy AG, Basel) werden mit 15,5 Teilen des Anhydridhärters HT 907 (Ciba-Geigy AG, Basel) sowie mit 11,1 Teilen einer Dispersion [Komponente (a)] eines cycloaliphatischen Epoxidharzes (äussere Phase), enthaltend ein dreidimensional vernetztes mit Epoxidgruppen versehenes Silkonharz (disperse Phase) in einer mittleren Teilchengrösse von 0.1µm bis 3µm (ALBIDUR EP 5340, hanse chemie GmbH, D-21502 Geesthacht, Deutschland), werden intensiv unter Verwendung eines Scherrührkopfes bei einer Rührgeschwindigkeit von 1400 Umdrehungen pro Minute und bei einer Temperatur von 50°C vermischt, wobei eine Dispersion, enthaltend das dreidimensional vernetzte Silikonharz, entsteht. Anschliessend wird bei etwa 100 mbar entgast.
b) Der unter a) erhaltenen Mischung werden nun 2 Teile eines viskosen epoxy-funktionalisierten Dimethylpolysiloxans [Komponente (b) (L-9300, Witco (Europe) S.A.)], enthaltend etwa 6 Gew.-% Octamethylcyclotetrasiloxan [Komponente (c)] unter den angegebenen Bedingungen (starkes Rühren, erhöhte Temperatur) zugegeben.
c) 0,3 Teile Beschleuniger (DY 062, Ciba-Geigy, Basel), 60 Teile silanisiertes Quarzmehl werden in einem Vakuum-Rührwerk (Zahnscheibenrührer) isotherm der unter b) erhaltenen Mischung zugefügt. Es wird während 10 Minuten bei 800 U/min bei einer Temperatur von 65°C vorgemischt. Dann wird bei 200 mbar entgast. Die Mischung wird nun mit dem unter b) erhaltenen Gemisch intensiv vermischt. Das erhaltene Giessharz wird in einem Rezipienten evakuiert und in einer auf 80°C heisse Giessform unter Vakuum vergossen. Nach einer Gelierzeit von 4 Stunden bei 80°C werden die Prüfkörper der Giessform entnommen und bei 140°C während 10 Stunden nachgehärtet. Dabei erhält man ein 4 mm dicke Platte, welche zu Prüfkörpern verarbeitet wird.

### Untersuchungsergebnisse

Testmethode für die Messung der Hydrophobie, des Hydrophobie-erhalts und der Hydrophobiewiederkehr sowie Vergleichsresultate zwischen den (i) aus gehärtetem Giessharz ohne Zusatz der Komponenten (a) und (b), den (ii) aus gehärtetem Giessharz mit Zusatz der Komponenten (a)und (b) und den (iii) aus gehärtetem Giessharz mit Zusatz der Komponenten (a) hergestellten Prüfkörpern.

Zur Prüfung des elektrischen Verhaltens der Prüfkörper werden diese einer elektrischen Corona-Entladung während einer Zeitdauer von mindestens 24 Stunden, besser 48 Stunden ausgesetzt. Dabei wird vorübergehend die Oberflächenhydrophobie vermindert oder gänzlich zerstört, worauf anschliessend eine Hydrophobie-Erholung einsetzt. Die Hydrophobie wird in an sich bekannter Weise mit dem dynamischen Vorrückwinkel mit Wasser in Graden (°) gemessen. Je grösser der Vorrückwinkel, umso höher die Hydrophobie. In der Tabelle 1 sind die Werte der Grundhydrophobie, gemessen mit dem statischen Randwinkel in (°) angegeben. Die Tabellen 2, 3 und 4 zeigen die Hydrophobie-Erholung nach der Corona-Alterung. Alle drei Durchläufe der Alterung und Messung wurden an den gleichen Prüfkörpern durchgeführt.

Die gemessenen mechanischen Eigenschaften der beiden Prüfkörper sind im wesentlichen in vergleichbarer Grössenordnung und liegen in jedem Fall über den erforderlichen Gebrauchswerten.

**Tabelle 1**

| | Statischer Randwinkel (Wasser, in (°), Prüfkörper gemäss Versuch (i) | Statischer Randwinkel (Wasser, in (°), Prüfkörper gemäss Versuch(ii) | Statischer Randwinkel (Wasser, in (°), Prüfkörper gemäss Versuch(iii) |
|---|---|---|---|
| Grundhydrophobie | 77,5 | 90 | 87,5 |

**Tabelle 2**

| Erste Periode der Coronaalterung, Alterungszeit t=48 h | Dynamischer Vorrückwinkel (Wasser, in (°), Prüfkörper gemäss Versuch (i) | Dynamischer Vorrückwinkel (Wasser, in (°), Prüfkörper gemäss Versuch(ii) | Dynamischer Vorrückwinkel (Wasser, in (°), Prüfkörper gemäss Versuch(iii) |
|---|---|---|---|
| Hydrophobie direkt nach der Corona-Entladung | 0 | 0 | 0 |
| Hydrophobie nach 2 h | 40 | 45 | 40 |
| Hydrophobie nach 4 h | 40 | 55 | 45 |
| Hydrophobie nach 24 h | 45 | 58 | 47 |
| Hydrophobie nach 48 h | 47 | 62 | 50 |
| Hydrophobie nach 72 h | 49 | 69 | 50 |
| Hydrophobie nach 96 h | 50 | 69 | 50 |

**Tabelle 3**

| Zweite Periode der Coronaalterung | Dynamischer Vorrückwinkel (Wasser, in (°), Prüfkörper gemäss Versuch (i) | Dynamischer Vorrückwinkel (Wasser, in (°), Prüfkörper gemäss Versuch(ii) | Dynamischer Vorrückwinkel (Wasser, in (°), Prüfkörper gemäss Versuch(iii) |
|---|---|---|---|
| Hydrophobie direkt nach der Corona-Entladung | 0 | 0 | 0 |
| Hydrophobie nach 2 h | 35 | 45 | 40 |
| Hydrophobie nach 4 h | 35 | 45 | 45 |
| Hydrophobie nach 24 h | 38 | 59 | 47 |
| Hydrophobie nach 48 h | 39 | 62 | 50 |
| Hydrophobie nach 72 h | 45 | 69 | 50 |
| Hydrophobie nach 96 h | 45 | 70 | 50 |

**Tabelle 4**

| Dritte Periode der Coronaalterung | Dynamischer Vorrückwinkel (Wasser, in (°), Prüfkörper gemäss Versuch (i) | Dynamischer Vorrückwinkel (Wasser, in (°), Prüfkörper gemäss Versuch(ii) | Dynamischer Vorrückwinkel (Wasser, in (°), Prüfkörper gemäss Versuch(iii) |
|---|---|---|---|
| Hydrophobie direkt nach der Corona-Entladung | 0 | 0 | 0 |
| Hydrophobie nach 24 h | 30 | 45 | 32 |
| Hydrophobie nach 100 h | 33 | 55 | 40 |
| Hydrophobie nach 200 h | 38 | 60 | 40 |
| Hydrophobie nach 300 h | 40 | 66 | 41 |
| Hydrophobie nach 400 h | 40 | 70 | 43 |
| Hydrophobie nach 500 h | 40 | 70 | 45 |

## Patentansprüche

1. Volumenmodifizierte Vergussmasse auf der Basis eines härtbaren Epoxidharzes oder einer Mischung solcher Harze, welches/welche aus einem Epoxidharz, einem Härter, gegebenenfalls einem Beschleuniger sowie weiteren Additiven wie Füllstoffe, Flexibilisatoren und Farbstoffe, besteht/bestehen, **dadurch gekennzeichnet, dass** diese Vergussmasse (a) ein dreidimensional vernetztes Polysiloxan in disperser Form und mit einer Teilchengrösse im Bereich von 0.02 µm bis 50 µm, welches gegebenenfalls reaktive Gruppen aufweist, die mit dem Epoxidharz und/oder dem Härter chemisch zu reagieren vermögen, (b) eine ausgewählte lineare oder verzweigte Siloxanverbindung, welche reaktive Gruppen aufweist, die mit dem Epoxidharz und/oder dem Härter chemisch zu reagieren vermögen, sowie gegebenenfalls (c) eine niedermolekulare oligomere Siloxanverbindung, enthält.

2. Vergussmasse nach Anspruch 1, **dadurch gekennzeichnet, dass** das dreidimensional vernetzte Polysiloxan [Komponente (a)] separat als Polysiloxandispersion, bestehend aus einer äusseren Phase und einer dispersen Phase, hergestellt und der Epoxid-Vergussmasse oder einer Komponenten derselben vor deren Härtung zugesetzt wurde.

3. Vergussmasse nach Anspruch 1 oder 2, **dadurch gekennzeichnet, dass** die äussere Phase der Polysiloxandispersion zu etwa 25 bis 99,9 Gew.-% aus einem bei Temperaturen von 20°C bis 100°C flüssigen monomeren oder polymeren Polyol, aus einem linearen oder verzweigten Polyglykolether, aus einem Polyester auf der Basis von Polyolen und aliphatischen, cycloaliphatischen oder aromatischen Dicarbonsäuren, aus Acrylatpolymeren oder Methacrylatpolymeren sowie entsprechende Copolymeren, oder einem Gemisch solcher Verbindungen besteht, wie solche als Härter in Epoxidharzsystemen einsetzbar sind.

4. Vergussmasse nach einem der Ansprüche 1-3, **dadurch gekennzeichnet, dass** die disperse Phase der Polysiloxandispersion zu etwa 0,1 bis 75 Gew.-% aus einem oder mehreren dreidimensional vernetzten Polyorganosiloxanen besteht, wobei die vernetzten Polyorganosiloxan-Teilchen einen mittleren Durchmesser von 0,02 µm bis 50 µm, vorzugsweise von 0,05 µm bis 10 µm, vorzugsweise von 0,07 µm bis 5 µm und vorzugsweise von 0,07 µm bis 1 µm aufweisen.

5. Vergussmasse nach einem der Ansprüche 1-4, **dadurch gekennzeichnet, dass** die Dispersion der Komponente a) gegebenenfalls bis zu 20 Gew.-% Additive enthält.

6. Vergussmasse nach einem der Ansprüche 1-5, **dadurch gekennzeichnet, dass** die dispergierten Polyorganosiloxanteilchen der Komponente a) an ihrer Oberfläche reaktive Gruppen aufweisen, über welche sie an das Epoxidharz oder an die Verbindung(en) der äusseren Phase chemisch angebunden werden können.

7. Vergussmasse nach einem der Ansprüche 1-6, **dadurch gekennzeichnet, dass** die Siliziumatome des quervernetzten Organopolysiloxan teilweise an organische einwertige, zweiwertige oder höherwertige Reste, welche gesättigt oder ungesättigt sein können und welche gegebenenfalls eine reaktive Gruppe tragen, gebunden sind.

8. Vergussmasse nach einem der Ansprüche 1-7, **dadurch gekennzeichnet, dass** die Siliziumatome des quervernetzten Organopolysiloxans teilweise an einwertige Reste, die gleich oder verschieden sein können, und lineare oder verzweigte, gegebenenfalls chlorierte und/oder fluorierte Alkylgruppen mit 1 bis 8 C-Atomen, oder an (C₁-C₄)-Alkylaryl oder Aryl gebunden sind; vorzugsweise an gegebenenfalls fluoriertes Alkyl mit 1-4 C-Atomen oder Phenyl, vorzugsweise an 3,3,3-Trifluoropropyl, Monofluoromethyl, Difluoromethyl oder Alkyl mit 1-4 C-Atomen, vorzugsweise an Methyl oder Phenyl, vorzugsweise an Methyl.

9. Vergussmasse nach einem der Ansprüche 1-8, **dadurch gekennzeichnet, dass** der Substituent, welcher eine reaktive Gruppe darstellt oder eine reaktive Gruppe trägt, der allgemeinen Formel (a) :
- (A)ᵣ-(reaktive Gruppe) (a),
entspricht, worin
A einen zweiwertigen gesättigten oder ungesättigten alifatischen Rest, der ein oder mehrere Sauerstoffatome und/oder -NH-Gruppen oder Phenylen enthalten kann, einen zweiwertigen cycloalifatischen Rest, einen zweiwertigen aromatischen Rest, wobei jeweils an eine freie Valenz dieses zweiwertigen Restes eine reaktive Gruppe gebunden ist, und der Ausdruck "reaktive Gruppe" Wasserstoff, Vinyl oder Allyl, wobei diese Substituenten in der Regel direkt an das Siliziumatom gebunden sind (r = Null) oder Glycidyl, Hydroxy (-OH), Amino (-NH₂) und/oder Carboxyl, wobei Hydroxy direkt oder über den Linker A an das Silziumatom gebunden ist, bedeuten.

10. Vergussmasse nach einem der Ansprüche 1-9, **dadurch gekennzeichnet, dass** der Substituent Formel (a) 3-Glycidoxypropyl, m-Aminophenyl, p-Aminophenyl, 3-(m-Aminophenoxy)propyl, 3-(2-Aminoethyl)aminopropyl oder Hydroxymethyl, vorzugsweise 3-Glycidoxypropyl, bedeutet.

11. Vergussmasse nach einem der Ansprüche 1-10, **dadurch gekennzeichnet, dass** die Komponente (b) eine fliessfähige Polyorganosiloxanverbindung darstellt, welche eine Viskosität im Bereich von 50 cSt bis 10'000 cSt, vorzugsweise im Bereich von 100 cSt bis 10'000 cSt und vorzugsweise im Bereich von 500 cSt bis 3'000 cSt, gemessen gemäss DIN 53 019 bei 20°C, aufweist.

12. Vergussmasse nach einem der Ansprüche 1-11, **dadurch gekennzeichnet, dass** die Komponente (b) eine Verbindung, bzw. ein Verbindungsgemisch, der allgemeinen Formel (I): 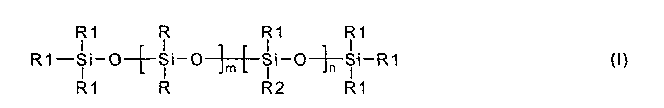 darstellt, worin
R unabhängig voneinander einen linearen, verzweigten oder cyclischen, gegebenenfalls chlorierten und/oder fluorierten, Alkylrest mit 1 bis 8 Kohlenstoffatomen, (C₁-C₄)-Alkylaryl oder Aryl; vorzugsweise einen, gegebenenfalls fluorierten, Alkylrest mit 1 bis 4 Kohlenstoffatomen oder Phenyl; vorzugsweise Phenyl, 3,3,3-Trifluoropropyl, Monofluoromethyl, Difluoromethyl oder Alkyl mit 1-4 Kohlenstoffatomen; vorzugsweise Methyl;
R₁ unabhängig voneinander eine der Bedeutungen von R oder R₂, wobei gegebenenfalls zwei an verschiedene Si-Atome gebundene endständige Substituenten R₁ zusammen genommen für ein Sauerstoffatom stehen (= cyclische Verbindung);
R₂ eine der Bedeutungen von R oder einen Rest -(A)ᵣ-(reaktive Gruppe), worin-(A)ᵣ-(reaktive Gruppe) die in Anspruch 9 oder 10 angegebenen Bedeutungen hat;
m durchschnittlich von Null bis 5000, vorzugsweise von 20 bis 5000, vorzugsweise 50 bis 1500;
n durchschnittlich von Null bis 100, vorzugsweise 2 bis 100, vorzugsweise 2 bis 20;
bedeuten, wobei (i) die Verbindung der Formel (I) mindestens zwei reaktive Gruppen pro Molekül aufweist, (ii) die Summe von [m+n] für nicht-cyclische Verbindungen mindestens 20, vorzugsweise mindestens 50 beträgt und (iii) die Gruppen -[Si (R) (R)O]- und-[Si (R₁) (R₂) O]- in beliebiger Reihenfolge im Molekül angeordnet sind.

13. Vergussmasse nach einem der Ansprüche 1-12, **dadurch gekennzeichnet, dass** die Komponente (b) eine cyclische Verbindung oder ein Gemisch cyclischer Verbindungen, der allgemeinen Formel (I) darstellt, welche aus -[Si (R) (R) O]- und/oder -[SiR₁(R₂)O]-Einheiten zusammengesetzt ist, vorzugsweise aus 4 bis 12, vorzugsweise aus 4 bis 8 solcher Einheiten und diese Verbindung pro Molekül mindestens 2 reaktive Gruppen aufweist.

14. Vergussmasse nach einem der Ansprüche 1-13, **dadurch gekennzeichnet, dass** die gegebenenfalls anwesende niedermolekulare oligomere Siloxanverbindung eine Verbindung darstellt, welche (i) aus -[Si (R) (R) 0]- Einheiten, welche endständig -OSi (R)₃-Gruppen bzw. -Si(R)₃-Gruppen aufweisen, zusammen gesetzt ist oder (ii) eine cyclische Verbindungen der Formel [Si(R) (R)O]ₜ darstellt, worin t eine ganze Zahl von 4 bis 12, vorzugsweise 4 bis 8 bedeutet und diese niedermolekulare oligomere Siloxanverbindung keine reaktiven Gruppen aufweist.

15. Vergussmasse nach einem der Ansprüche 1-14, **dadurch gekennzeichnet, dass** die Summe der Komponente (a) und der Komponente (b) bezogen auf die gesamte Menge der Vergussmasse 0.1 Gew.-% bis 30 Gew.-%, vorzugsweise 0,5 Gew.-% bis 10 Gew.-% und insbesondere etwa 2 bis 5 Gew.-%, beträgt

16. Vergussmasse nach einem der Ansprüche 1-15, **dadurch gekennzeichnet, dass** das Gewichtsverhältnis der Komponente (a) zur Komponente (b) im Bereich von 5:1 bis 1:5, vorzugsweise im Bereich von 5:1 bis 2:1, liegt und vorzugsweise etwa 4,4:1 beträgt.

17. Vergussmasse nach einem der Ansprüche 1-16, **dadurch gekennzeichnet, dass** die Menge der niedermolekulare oligomere Siloxanverbindung 0.1 Gew.-% bis 10 Gew.-%, vorzugsweise 0,5 Gew.-% bis 5 Gew.-% und insbesondere etwa 1 Gew.-%, bezogen auf das Gesamtgewicht der Mischung, beträgt.

18. Vergussmasse nach einem der Ansprüche 1-17, **dadurch gekennzeichnet, dass** diese mindestens einen Füllstoff enthält, vorzugsweise Quarzmehl, Aluminiumoxid und/oder Dolomite in verschiedenen an sich bekannten Mahlungen, vorzugsweise mit einer Silanisierung versehen.

19. Verfahren zur Herstellung einer Vergussmasse nach einem der Ansprüche 1-18, **dadurch gekennzeichnet, dass** man zumindest einen Teil der Epoxidgruppen enthaltenden Komponenten (a) und (b) mit dem Härter vormischt und vorhärtet oder zumindest einen Teil der Hydroxyl, Amino oder Carboxyl enthaltenden Komponenten (a) und (b) mit dem Epoxidharz vormischt und vorhärtet.

20. Verwendung einer Vergussmasse nach einem der Ansprüche 1-18 als Konstruktionswerkstoff als auch als Isoliermaterial, insbesondere für die Herstellung von Formteilen und Beschichtungen auf dem Gebiet der elektrischen Isolierungen, für die Herstellung von Hochspannungsisolierung für den Freilufteinsatz, für die Herstellung von Freiluftisolatoren bei Hochspannungsleitungen als Langstab-, Verbund- und Kappenisolatoren, für Stützisolatoren im Mittelspannungsbereich, in der Herstellung Isolierungen bei Freiluft-Leistungschaltern, Messwandlern, Durchführungen und Ableitern, im Schaltanlagenbau, in Leistungsschaltern, Trockentransformatoren und elektrischen Maschinen, als Beschichtungsmaterialien für Transistoren und andere Halbleiterelemente, zum Imprägnieren von elektrischen Bauteilen, als Korrosionsschutz für metallische Bauteile.

21. Die aus den erfindungsgemässen Vergussmasse gemäss einem der Ansprüche 1 bis 18 hergestellten Konstruktionsteile und elektrischen Isolierungen.
